Europäisches Patentamt

European Patent Office

Office européen des brevets

(19)

(11) Veröffentlichungsnummer: **0 016 865**
**A1**

(12) # EUROPÄISCHE PATENTANMELDUNG

(21) Anmeldenummer: 79105093.3

(22) Anmeldetag: 11.12.79

(51) Int. Cl.³: **F 16 B 12/50, H 02 B 1/02**

(30) Priorität: 22.03.79 DE 2911323

(43) Veröffentlichungstag der Anmeldung: **15.10.80**
**Patentblatt 80/21**

(84) Benannte Vertragsstaaten: **AT BE CH FR IT NL**

(71) Anmelder: **SIEMENS AKTIENGESELLSCHAFT,**
**Postfach 22 02 61, D-8000 München 22 (DE)**

(72) Erfinder: **Kerscher, Franz, Böcklerweg 13,**
**D-8000 München 82 (DE)**
Erfinder: **Metzner, Günter, Schönstrasse 108,**
**D-8000 München 90 (DE)**

(54) **Schraubverbindung für Hohlrohrprofile.**

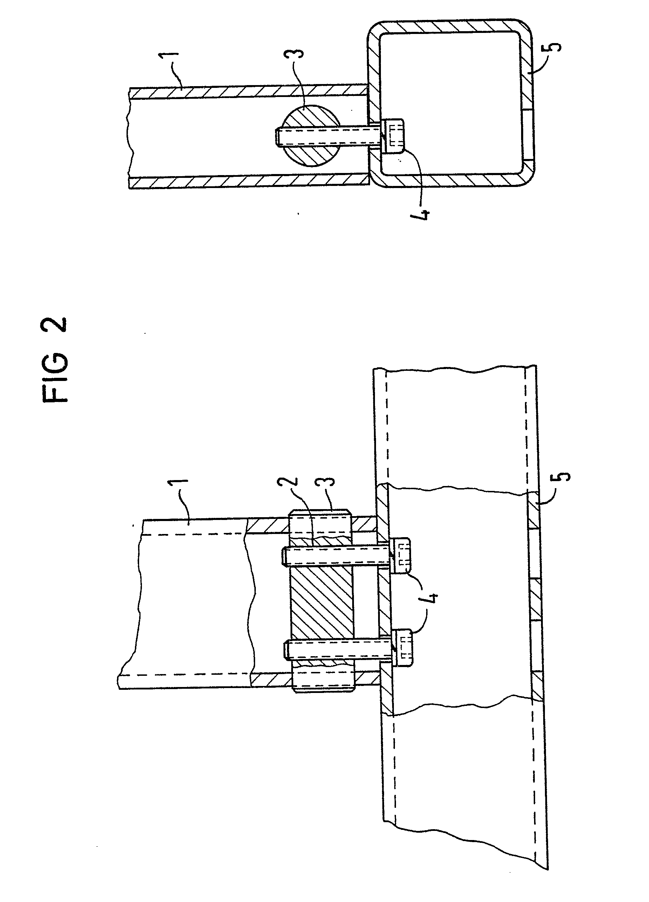

(57) Die Erfindung bezieht sich auf eine Schraubverbindung zum stumpfen Aufeinanderschrauben von Hohlrohrprofilen für Rahmengestelle zur Aufnahme von elektrischen Baugruppen, insbesondere der Datenverarbeitungstechnik. Zum Aufbau von Rahmengestellen werden Hohlrohrprofile benutzt, wobei die Verbindung der Hohlrohre sicher und belastbar sein soll. Die Verbindung sieht hierzu jeweils ein Hohlrohrprofil mit einer Querbohrung vor, in die ein Bolzen (3) mit senkrecht zu seiner Längsachse versehenen Innengewinden (2) eingeschoben ist. In die Innengewinde (2) greifen Schrauben (4) ein, die durch einen senkrecht zum ersten Hohlrohr (1) stehenden zweiten Hohlrohr (5) hindurchgeführt sind (Fig. 2).

EP 0 016 865 A1

SIEMENS AKTIENGESELLSCHAFT        Unser Zeichen
Berlin und München               VPA
                                      79 P 2 0 1 1  EUR


Schraubverbindung für Hohlrohrprofile

Die Erfindung betrifft eine Schraubverbindung zum stumpfen Aufeinanderschrauben von Hohlrohrprofilen für Rahmengestelle zur Aufnahme von elektrischen Baugruppen, insbesondere der Datenverarbeitungstechnik.

Zum Aufbau von Rahmengestellen werden Hohlrohrprofile benutzt, die senkrecht aufeinander stehen und entweder verschweißt oder mit zusätzlichen Tragwinkeln verschraubt sind. Die Verschweißung birgt die Gefahr des Verziehens in sich. Außerdem wird der Korrosionsschutzüberzug zerstört und die geschweißten Stellen müssen nachbehandelt werden. Bei Verwendung von Tragwinkeln mit Schraubverbindungen müssen zusätzliche Teile verwendet werden.

Aufgabe der vorliegenden Erfindung ist es, eine Schraubverbindung für stets aneinandergereihte Hohlrohre zu schaffen, die sicher und belastbar ist.

Zur Lösung dieser Aufgabe wird gemäß der Erfindung die

Zk 1 Sur / 21.3.1979

Schraubverbindung derart ausgebildet, daß jeweils ein Hohlrohrprofil mit einer Querbohrung versehen ist, in die ein senkrecht zu seiner Längsachse mit Innengewinden versehener Bolzen eingeschoben ist, daß in die Innengewinde Schrauben, die durch einen senkrecht zum ersten Hohlrohr stehenden zweiten Hohlrohr hindurchgeführt sind, einschraubbar sind.

Durch diese Maßnahmen erhält man eine hochfeste Schraubverbindung, die durch Werkstoffwahl und Dimensionierung der Bolzen beeinflußt werden kann. Der Toleranzausgleich in Längsrichtung des Bolzens erlaubt eine großzügige Tolerierung; ein Schrankaufbau mit geschweißten Ober- und Unterrahmen und vier senkrecht verschraubten Holmen ist möglich. Zwischenstege können in die Gerüste eingeschraubt werden. Der Verzug der Gerüste durch die Wärmeentwicklung beim Schweißen entfällt. Für die Montage ist außerdem nur eine einfache Vorrichtung erforderlich.

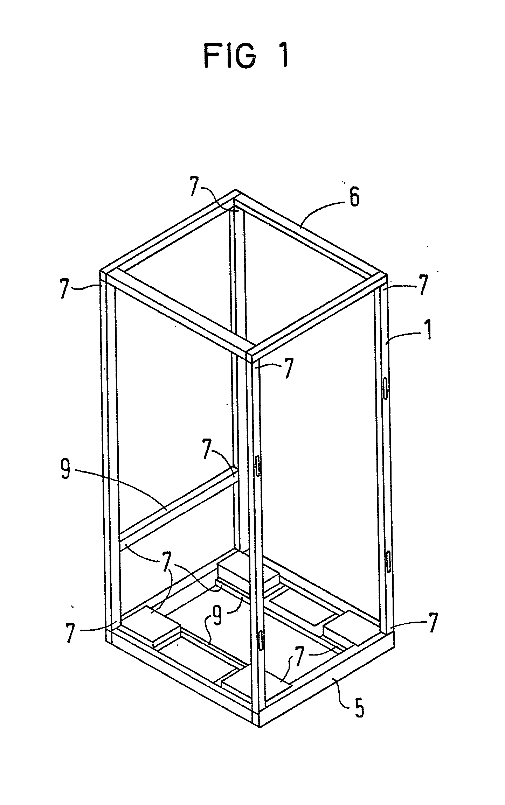

Anhand der Ausführungsbeispiele nach den Figuren 1 und 2 wird die Erfindung näher erläutert.

Figur 1 zeigt ein Rahmengestell, daß das Anbringen von Seitenwänden sowie Boden- und Kopfblechen zu einem Schrankgestell ergänzt werden kann. Derartige Schrankgestelle sind vor allem zur Aufnahme von Baueinheiten für die Datenverarbeitungstechnik erforderlich. Das Gerüst des Schrankgestells besteht dabei aus einem Oberrahmen 5, einem Unterrahmen 7 und vier senkrechten Holmen 1. Außerdem können noch Zwischenstege 9 eingefügt sein. Während die Ober- und Unterrahmen in der Regel geschweißt sind, können die senkrechten Holme mit den Rahmen über eine noch näher zu beschreibende Schraubverbindung miteinander verbunden sein.

In Figur 2 ist eine derartige Schraubverbindung dargestellt. Die linke Seite zeigt eine Vorderansicht, während die rechte Seite eine Seitenansicht, z.B. der Stelle 10 in Figur 1 darstellt. In den Holmen 1 ist eine Querbohrung vorgesehen, in die der Bolzen 3 eingelegt ist. Der Bolzen 3 ist dabei mit zwei Gewindebohrungen 2 versehen, in die von unten her Schrauben eingreifen. Diese Schrauben sind durch ein zweites Hohlrohrprofil durchgesteckt und verbinden beim Anziehen das erste Hohlprofil 1 mit dem zweiten Hohlprofil 5. Die Kräfte werden über die Lochbohrung in die Bohrung übertragen. Die Flächenpressung an den Berührungsflächen der Rohre ergibt den Kraftschluß. Im vorliegenden Fall ist dabei ein Vierkantrohr dargestellt. Grundsätzlich kann die Schraubverbindung jedoch auch bei anderen Hohlrohrprofilen verwendet werden.

1 Patentanspruch
2 Figuren

0016865

Patentanspruch

Schraubverbindung zum stumpfen Aufeinanderschrauben von Hohlrohrprofilen für Rahmengestelle zur Aufnahme von elektrischen Baugruppen, insbesondere der Datenverarbeitungstechnik, d a d u r c h   g e k e n n z e i c h - n e t ,   daß jeweils ein Hohlrohrprofil (1) mit einer Querbohrung versehen ist, in die ein senkrecht zu seiner Längsachse mit Innengewinden (2) versehener Bolzen (3) eingeschoben ist, daß in die Innengewinde (3) Schrauben (4), die durch einen senkrecht zum ersten Hohlrohr (1) stehenden zweiten Hohlrohr (5) hindurchgeführt sind, einschraubbar sind.

FIG 1

FIG 2

0016865
Nummer der Anmeldung
EP 79 10 5093

**Europäisches Patentamt**

# EUROPÄISCHER RECHERCHENBERICHT

| KLASSIFIKATION DER ANMELDUNG (Int.Cl. 3) |
|---|
| F 16 B 12/50 H 02 B 1/02 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 807 685 (BRADLEY AND CO.)  *  Seite 1, Zeilen 48-62 *  -- | 1 |
| X | FR - A - 1 447 687 (S.A. HEULIEZ)  *  Seite 1 *  ---- | 1 |

| RECHERCHIERTE SACHGEBIETE (Int. Cl. 3) |
|---|
| H 02 B 1/02 F 16 B 7/18 12/30 12/50 7/00 |

| KATEGORIE DER GENANNTEN DOKUMENTE |
|---|
| X: von besonderer Bedeutung |
| A: technologischer Hintergrund |
| O: nichtschriftliche Offenbarung |
| P: Zwischenliteratur |
| T: der Erfindung zugrunde liegende Theorien oder Grundsätze |
| E: kollidierende Anmeldung |
| D: in der Anmeldung angeführtes Dokument |
| L: aus andern Gründen angeführtes Dokument |
| &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 10-06-1980 | DAILLOUX |

EPA form 1503.1   06.78